# EUROPÄISCHE PATENTSCHRIFT

(11) **EP 1 952 025 B1**
(45) Veröffentlichungstag und Bekanntmachung des Hinweises auf die Patenterteilung: **05.01.2011**
(21) Anmeldenummer: 06818879.6
(22) Anmeldetag: 28.11.2006
(51) Int. Cl.: F04C 18/344, F04C 29/02

(54) **ROTORPUMPE**
ROTARY PUMP
POMPE À ROTOR

(30) Priorität: 31.03.2006 DE 102006016241
(43) Veröffentlichungstag der Anmeldung: 06.08.2008
(73) Patentinhaber: Joma-Polytec GmbH, 72411 Bodelshausen (DE)
(72) Erfinder: SCHNEIDER, Willi, 72411 Bodelshausen (DE); HELLE, Torslen, 72072 Tübingen (DE); THOMA, Martin, 72379 Hechingen-Stein (DE)
(74) Vertreter: Steimle, Josef
(86) Internationale Anmeldenummer: PCT/EP2006/011398
(87) Internationale Veröffentlichungsnummer: WO 2007/118502

(56) Entgegenhaltungen:
- WO-A-2006/024872
- DE-A1- 3 841 329
- DE-B3-102004 034 919
- GB-A- 823 712

## Beschreibung

Die Erfindung betrifft eine Rotorpumpe mit einem im Pumpengehäuse drehbar gelagerten Rotor und wenigstens einem im Rotor verschieblich geführten Flügel, wobei der Flügel mit wenigstens einer seiner Flügelspitzen an einer Innenumfangsfläche des Arbeitsraumes anliegt und dadurch diesen in einen Saugraum und einen Druckraum unterteilt, und mit einer Schmiermittelversorgungseinrichtung mit einer Versorgungsleitung, deren Auslass direkt oder indirekt in den Arbeitsraum ausmündet.

Rotorpumpen zum Erzeugen eines Unterdrucks oder zum Erzeugen eines Überdrucks sind allgemein bekannt, zum Beispiel aus der DE 10 2004 034 919 B3 und der DE3841 329 A1, die als nächstliegender Stand der Technik angesehen wird. Sie besitzen ein Gehäuse, in welchem ein Arbeitsraum vorgesehen ist, in dem ein Rotor drehbar gelagert ist, wobei der Rotor einen Flügel trägt, der den Arbeitsraum in einen Saugraum und in einen Druckraum unterteilt. Dabei ist der Saugraum mit einem Sauganschluss und der Druckraum mit einem Druckanschluss verbunden. Der Rotor kann entweder mit einem oder mit mehreren Flügeln bestückt sein, die mit einer Flügelspitze an der Umfangswand des Arbeitsraums entlang gleiten.

Derartige Rotorpumpen bedürfen einer Schmierung, um die Reibung zu verringern und dadurch den Verschleiß auf einem Minimum zu halten, jedoch auch um den Druckraum gegenüber dem Saugraum abzudichten.

Werden derartige Rotorpumpen in Kraftfahrzeugen eingesetzt, so wird in der Regel das Motoröl für die Schmierung der Pumpe verwendet. Es hat sich gezeigt, dass aufgrund der stark schwankenden Drehzahl des Motors und der dadurch stark schwankenden Drücke in der Versorgungsleitung für das Schmieröl eine konstante Schmierung der Pumpe nahezu unmöglich ist. Die Schiermittelversorgung muss jedoch so eingestellt sein, dass die Rotorpumpe auch bei niedrigster Drehzahl des Motors mit ausreichend Schmiermittel versorgt wird. Erhöht sich die Drehzahl des Motors, dann erhält die Pumpe in der Regel zu viel Schmiermittel, was den Nachteil hat, dass dieses zu viel geförderte Schmiermittel zusätzlich abgeführt werden muss. Zum anderen muss die Förderpumpe für das Schmiermittel unnötig viel Schmieröl fördern, was Energie benötigt.

Der Erfindung liegt die Aufgabe zugrunde, eine Rotorpumpe bereitzustellen, die unempfindlicher gegen Druckschwankungen in der Schmiermittelzuführleitung ist.

Diese Aufgabe wird mit einer Rotorpumpe der eingangs genannten Art erfindungsgemäß durch die Merkmale des Anspruchs 1 gelöst.

Aufgrund der in der Versorgungsleitung vorgesehenen Schmiermittelförderungsbegrenzungseinrichtung wird der Umstand geschaffen, dass bei niedrigen Drehzahlen des Motors die Rotorpumpe mit ausreichend viel Schmiermittel versorgt wird, dass aber bei hohen Drehzahlen des Motors die angestiegene Fördermenge des Schmiermittels begrenzt oder vermindert wird, so dass die Schmiermittelförderpumpe nicht unnötig Schmiermittel an die Rotorpumpe fördert. Zum einen wird hierdurch Energie seitens der Förderpumpe eingespart, zum anderen muss dieses Öl von der Rotorpumpe nicht zusätzlich abgeführt werden.

Erfindungsgemäß weist die Schmiermittelförderungsbegrenzungseinrichtung einen verstellbaren Fördermengenbegrenzer auf. Durch die verstellbare Ausführung des Fördermengenbegrenzers kann die Pumpe an die erforderliche Fördermenge exakt eingestellt werden, so dass bei niedrigen Drehzahlen ausreichend Schmiermittel und bei hohen Drehzahlen nicht zu viel Schmiermittel vorhanden ist.

Erfindungsgemäß ist der Fördermengenbegrenzer mit einer Blende versehen. Durch die Verwendung einer Blende wird ein einfaches Hindernis für das der Rotorpumpe zuströmende Schmiermittel geschaffen, wobei durch geeignete Wahl der Blendenöffnung die Schmiermittelmenge exakt eingestellt werden kann.

Erfindungsgemäß weist der Fördermengenbegrenzer einen in Strömungsrichtung sich erstreckenden Dorn auf. Dabei zeigt die Spitze des Dorns entgegen der Strömungsrichtung, so dass der Dorn nahezu keinen Widerstand darstellt. Der Dorn ist dabei so ausgerichtet, dass er zur Öffnung der Blende fluchtet und koaxial liegt. Diese Anordnung besitzt den Vorteil, dass das durch die Blende hindurchströmende Schmiermittel, welches anschließend auf den Dorn auftrifft, abgelenkt wird, da der Dorn ein Hindernis im Strömungsweg des Schmiermittels darstellt. Durch die Entfernung des Dorns von der Blende kann die Größe des Hindernisses eingestellt werden.

Erfindungsgemäß ist der Dorn in die Öffnung der Blende einführbar. Durch diese Maßnahme kann der lichte Querschnitt der Blendenöffnung auf einfache Weise verändert werden, indem der Dorn in die Blendenöffnung eingeschoben wird oder nicht.

Weiterhin weist erfindungsgemäß der Dorn eine kegelförmige Spitze auf. Durch mehr oder weniger weites Einführen des Dorns in die Blendenöffnung kann der lichte Querschnitt der Blendenöffnung stufenlos verändert werden. Hierdurch wird eine präzise Regelung der Schmiermittelmenge möglich.

Schließlich hängt erfindungsgemäß die Eintrittstiefe des Dorns in die Blendenöffnung vom anliegenden Unterdruck der Rotorpumpe und/oder vom Schmiermitteldruck ab. Bei ansteigendem Schmiermitteldruck, wodurch sich die Strömungsgeschwindigkeit vergrößert, wird der Dorn weiter in die Blendenöffnung eingeschoben, sodass der lichte Querschnitt verringert wird, wodurch die Menge an Schmiermittel, welche der Rotorpumpe zugeführt wird, weitestgehend gleich bleibt. Die geförderte Schmiermittelmenge ist somit vom Schmiermitteldruck unabhängig.

Bei einer Weiterbildung ist vorgesehen, dass die Versorgungsleitung in den Saugraum, in den Druckraum und/oder in die Antriebswelle des Rotors der Rotorpumpe ausmündet. Das der Rotorpumpe zugeführte Öl gelangt z.B. direkt in den Saugraum und wird dort an die zu schmierenden und abzudichtenden Stellen zwischen Flügel und Pumpengehäuse verteilt, in der Regel durch den sich drehenden Flügel. Die Ausmündung der Versorgungsleitung in den Saugraum besitzt außerdem den Vorteil, dass dem Förderdruck des Schmiermittels kein Gegendruck der Pumpe entgegenwirkt. Vielmehr wird die Förderung durch die Saugleistung der Pumpe unterstützt, was aber maximal ein Bar ist.

Bei einem bevorzugten Ausführungsbeispiel ist vorgesehen, dass die Blende in Richtung auf den Dorn verschieblich gelagert ist. Bei dieser Variante wird also die Blende vom geförderten Schmiermittel angeströmt, sodass diese in Richtung auf den Dorn verlagert wird, der dabei in die Blendenöffnung eindringt. Hierdurch wird der lichte Querschnitt der Blendenöffnung verringert.

Bei einem anderen Ausführungsbeispiel ist der Dorn in Richtung auf die Blende verschieblich gelagert. Bei dieser Variante wird die Rückseite des Dorns angeströmt, so dass dieser bei erhöhtem Schmiermitteldruck und höherer Schmiermittelgeschwindigkeit in Richtung auf die Blende verlagert wird und dadurch der Dorn in die Blendenöffnung eingreift, und deren lichten Querschnitt verringert.

Um die Blende und den Dorn in Ruhestellung auf Abstand zu halten, ist zwischen der Blende und dem Dorn ein diese auf Abstand haltendes Mittel, zum Beispiel eine Feder, angeordnet. Diese Feder hat die Aufgabe, den Dorn außerhalb der Blendenöffnung zu halten beziehungsweise bei sich verringerndem Schmiermitteldruck den Dorn aus der Blendenöffnung herauszuziehen. Auf diese Weise wird ein selbsttätig regelndes Mittel geschaffen, welches vom Schmiermitteldruck und/oder von der Geschwindigkeit der Schmiermittelströmung abhängt.

Mit Vorzug ist der Fördermengenbegrenzer austauschbar in der Versorgungsleitung angeordnet. Somit kann der Fördermengenbegrenzer im Reparaturfalle leicht ausgetauscht werden, beziehungsweise kann durch Einsatz eines anderen Fördermengenbegrenzers die Menge an gefördertem Schmieröl an andere Umgebungsbedingen angepasst werden.

Mit Vorzug wird der Fördermengenbegrenzer direkt vom Schmiermittel durchströmt, so dass weder Sensoren noch Aktoatoren zur Betätigung des Fördermengenbegrenzers erforderlich sind.

Weitere Vorteile, Merkmale und Einzelheiten der Erfindung ergeben sich aus den Unteransprüchen sowie der nachfolgenden Beschreibung, in der unter Bezugnahme auf die Zeichnung zwei besonders bevorzugtes Ausführungsbeispiele im Einzelnen beschrieben sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur: 1 eine Explosionsdarstellung einer Rotorpumpe;
- Figur 2: einen Querschnitt durch eine erste Ausführungsform einer Schmiermittelförderungsbegrenzungseinrichtung;
- Figur 3: einen Schnitt III - III gemäß Figur 2;
- Figur 4: einen Querschnitt durch eine zweite Ausführungsform einer Schmiermittelförderungsbegrenzungseinrichtung in Ruhelage, und
- Figur 5: einen Querschnitt durch eine zweite Ausführungsform einer Schmiermittelförderungsbegrenzungseinrichtung in Arbeitslage.

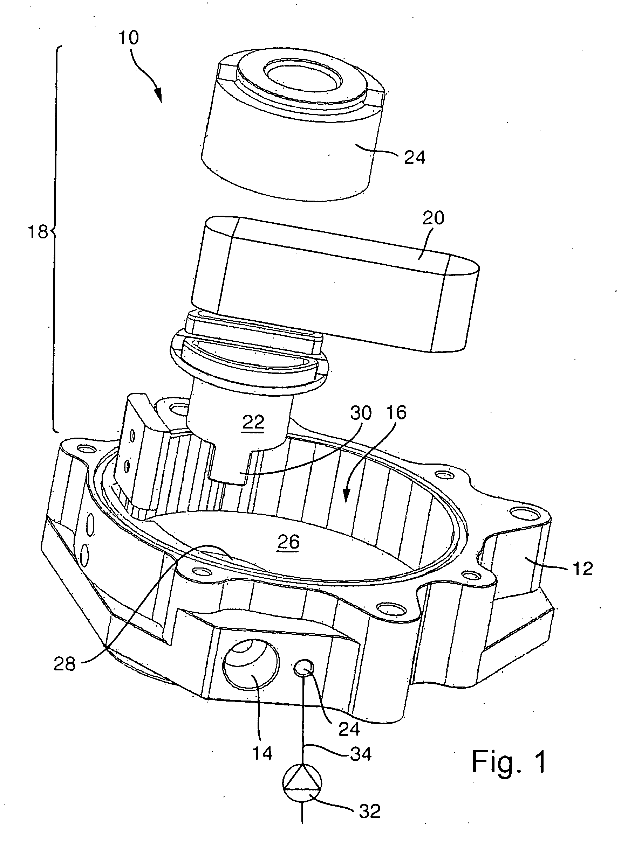

In der Figur 1 ist mit dem Bezugszeichen 10 insgesamt eine als Vakuumpumpe ausgebildete Rotorpumpe bezeichnet, bei welcher das Gehäuse 12 ohne Gehäusedeckel dargestellt ist. Das Gehäuse 12 besitzt einen Sauganschluss 14, der in einen Innenraum 16 mündet. In diesem Innenraum 16 befindet sich ein insgesamt mit 18 bezeichneter Rotor, in welchem ein Flügel 20 orthogonal zur Drehachse 22 verschieblich gelagert ist. Der Rotor 18 durchgreift das Gehäuse 12, insbesondere einen Boden 26 des Innenraums 16 über eine Antriebsöffnung 28, so dass er von außen über einen rechteckförmigen Abschnitt 30 angetrieben werden kann. Unmittelbar neben dem Sauganschluss befindet sich ein Anschluss 24 für eine Schmiermittelversorgungseinrichtung 32, die in Figur 1 lediglich schematisch dargestellt ist und bei einem Kraftfahrzeug zum Beispiel die Ölpumpe darstellt. Diese Schmiermittelversorgungseinrichtung 32 ist über eine Versorgungsleitung 34 mit der Rotorpumpe 10 verbunden. Innerhalb der Versorgungsleitung 34, jedoch bevorzugt innerhalb des Anschlusses 24 und somit innerhalb der Rotorpumpe 10, befindet sich eine Schmiermittelförderungsbegrenzungseinrichtung 36, mit welcher die Fördermenge des der Rotorpumpe 10 zugeführten Schmiermittels eingestellt oder begrenzt wird. Die Versorgungsleitung 24 mündet in den Innenraum 16 direkt oder indirekt aus.

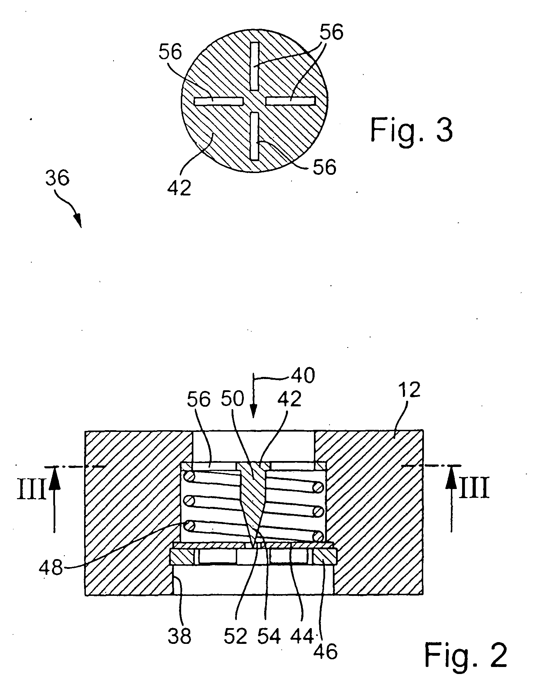

Die Figur 2 zeigt ein erstes Ausführungsbeispiel einer Schmiermittelförderungsbegrenzungseinrichtung 36, wie sie zum Beispiel in den Anschluss 24 von innen, das heißt vom Innenraum 16 aus, eingesetzt ist. Das Gehäuse 12 ist nur andeutungsweise dargestellt und besitzt eine Stufenbohrung 38, welche in Richtung des Pfeils 40 vom Schmiermittel durchströmt wird. In die Stufenbohrung 38 sind ein Dornhalter 42 sowie eine Blende 44 nacheinander eingesetzt, wobei die Blende 44 von einem Halte- oder Sicherungsring 46 (Seegerring) in Position gehalten wird.

Dabei fluchtet ein Dorn 50 des Dornhalters 42 mit der Blendenöffnung 42 der Blende 44, wobei die Spitze 54 des Dornes 50 in Richtung des Pfeils 40, also in Strömungsrichtung, zeigt. Der Dorn 50 ist koaxial zur Blendenöffnung 52 ausgerichtet und befindet sich in dessen Ruhestellung außerhalb der Blendenöffnung 52.

Wie aus Figur 3 ersichtlich, weist der Dornhalter 42 vier Schlitze 56 auf, welche vom Schmieröl durchströmt werden. Bei geringem Schmieröldruck nimmt der Dornhalter 42 die in der Figur 2 gezeigte Position ein und das Schmiermittel durchströmt die Schlitze 56 und passiert anschließend die Blendenöffnung 52. Erhöht sich der Schniermitteldruck und somit die Strömungsgeschwindigkeit des Schmiermittels und dadurch die geförderte Menge des Schmiermittels, dann wird der Dornhalter 42 vom Schmiermittel in Richtung des Pfeils 40 mitgenommen, wodurch der Dorn 50 in die Blendenöffnung 52 allmählich eingeschoben wird. Dabei wird der Dornhalter 42 entgegen der Kraft der Wendelfeder 48 verschoben und dabei die Wendelfeder 4.8 komprimiert. Das Einschieben des Dornes 50 in die Blendenöffnung 52 bewirkt eine Verringerung der lichten Weite der Blendenöffnung 52, wodurch der Strömungsquerschnitt verringert und dadurch die Menge des die Blende 44 passierenden Schmiermittels verändert wird. Diese Querschnittsveränderung bewirkt eine Reduzierung derjenigen Fördermenge, die die Blende 44 durchströmen würde, wenn der Dorn 50 nicht in die Blende 44 eingeschoben würde. Dadurch wird vermieden, dass der Rotorpumpe 10 zu viel Schmiermittel zugeführt wird.

Bevorzugt wird durch die Schmiermittelförderungsbegrenzungseinrichtung die Menge an gefördertem Schmiermittel trotz Erhöhung des Schmiermitteldrucks und Vergrößerung der Strömungsgeschwindigkeit des Schmiermittels weitestgehend konstant gehalten. Verringert sich der Schmiermitteldruck und die Strömungsgeschwindigkeit des Schmiermittels, dann wird der Dornhalter 42 aufgrund der Rückstellkraft der Wendelfeder 48 wieder in seine Ausgangslage, welche in der Figur 2 dargestellt ist, ganz oder teilweise zurückverlagert und dadurch der Dorn 50 aus der Blendenöffnung 52 ganz oder teilweise herausgezogen, wodurch sich deren lichter Querschnitt wieder vergrößert.

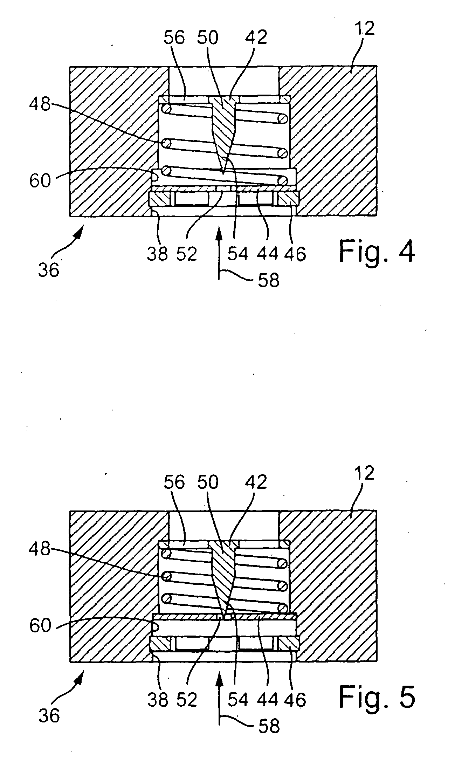

Die Figuren 4 und 5 zeigen ein zweites Ausführungsbeispiel der Erfindung, wobei die Strömungsrichtung des Schmiermittels mit dem Pfeil 58 dargestellt ist. Bei diesem. Ausführungsbeispiel wird die Blende 44 direkt angeströmt und das Schmiermittel durchströmt die Blendenöffnung 52, deren lichter Querschnitt in der in der Figur 4 dargestellten Lage maximal ist. Die Blende 44 liegt bei dieser Ausführungsform in einem verlängerten Abschnitt 60 der Stufenbohrung 38 und wird von der Wendelfeder 48 in Richtung auf den Haltering 46 gedrängt. Bei geringem Schmiermitteldruck und geringer Strömungsgeschwindigkeit des Schmiermittels nimmt die Blende 44 die in der Figur 4 gezeigte Position ein.

Erhöht sich der Schmiermitteldruck und somit die Geschwindigkeit des Schmiermittels, welches der Blende 44 in Richtung des Pfeils 58 zuströmt, wird diese, wie in Figur 5 dargestellt, in Strömungsrichtung mitgenommen. Dadurch wird die Wendelfeder 48 komprimiert und die Blende 44 nähert sich dem Dornhalter 42 an, wodurch der Dorn 50, insbesondere die Spitze 54 des Dorns 50 in die Blendenöffnung 52 eindringt und dadurch den lichten Querschnitt der Blendenöffnung 52 verkleinert. Dadurch wird der Widerstand für das die Blendenöffnung 52 durchströmende Schmieröl vergrößert. Die Form des Dorns 50, die Größe der Blendenöffnung 52, der Abstand des Dornhalters 42 von der Blende 44 sowie die Federkonstante der Wendelfeder 48 bestimmen die Regelgröße der Schmiermittelförderungsbegrenzungseinrichtung 36.

Aus den Figuren 4 und 5 ist auch ersichtlich, dass die dort gezeigte Schmiermittelförderungsbegrenzungseinrichtung 36 entgegen der Richtung des Pfeils 58 durchströmt werden kann, wobei dann der Dornhalter 42 in Richtung auf die Blende 44 verschoben wird, und der Dorn 50 in die Blendenöffnung 52 eindringt, wobei der Verschiebeweg des Dornhalters 42 dann größer ist, als der Verschiebeweg der Blende 44.

Mit der erfindungsgemäßen Schmiermittelförderungsbegrenzungseinrichtung 36 wird auf einfache Weise bei sich erhöhendem Schmiermitteldruck und/oder sich vergrößernder Geschwindigkeit des Schmiermittels die Menge an gefördertem Schmiermittel verringert und/oder insbesondere konstant gehalten, indem der Widerstand innerhalb der Schmiermittelförderungsbegrenzungseinrichtung 36 auf das Schmiermittel vergrößert wird. Durch Austausch von Dornhalter 42, Blende 44 und/oder Wendelfeder 48 kann die Schmiermittelförderungsbegrenzungseinrichtung 36 an andere Schmiermittelarten oder an andere Rotorpumpen 10 angepasst werden.

## Patentansprüche

1. Rotorpumpe (10) mit einem Pumpengehäuse (12), einem im Pumpengehäuse (12) drehbar gelagerten Rotor (18) und wenigstens einem im Rotor (18) verschieblich geführten Flügel (20), wobei der Flügel (20) mit wenigstens einer seiner Flügelspitzen an einer Innenumfangsfläche des Arbeitsraumes (16) anliegt und **dadurch** diesen in einen Saugraum und einen Druckraum unterteilt, und mit einer Schmiermittelversorgungseinrichtung (32) mit einer Versorgungsleitung (34), deren Auslass (24) direkt oder indirekt in den Arbeitsraum (16) ausmündet, wobei in der Versorgungsleitung (16) ein verstellbarer Fördermengebegrenzer für das Schmiermittel vorgesehen ist und der Fördermengenbegrenzer mit einer Blende (44) versehen ist, **dadurch gekennzeichnet, dass** der Fördermengenbegrenzer einen sich in Strömungsrichtung (40) erstreckenden Dorn (50) aufweist, der Dorn (50) zur Öffnung (52) der Blende (44) fluchtet und mit einer kegelförmigen Spitze (54) in die Öffnung (52) der Blende (44) einführbar ist, wobei die Eintrittstiefe des Dorns (50) in die Blendenöffnung (52) vom von der Rotorpumpe (10) erzeugten Unterdruck und/oder vom Schmiermitteldruck abhängt.

2. Rotörpumpe nach Anspruch 1, **dadurch gekennzeichnet, dass** die Versorgungsleitung (34) in den Saugraum, in den Druckraum und/oder in die Antriebswelle (30) des Rotors (18) ausmündet.

3. Rotorpumpe nach einem der vorhergehenden Ansprüche, **dadurch gekennzeichnet, dass** die Blende (44) in die Richtung auf den Dorn (50) verschieblich gelagert ist.

4. Rotorpumpe nach Anspruch 1 oder 2, **dadurch gekennzeichnet, dass** der Dorn (50) in Richtung auf die Blende (44) verschieblich gelagert ist.

5. Rotorpumpe nach einem der vorhergehenden Ansprüche, **dadurch gekennzeichnet, dass** zwischen der Blende (44) und dem Dorn (50) ein diese auf Abstand haltendes Mittel, zum Beispiel eine Feder (48), angeordnet ist.

6. Rotorpumpe nach einem der vorhergehenden Ansprüche, **dadurch gekennzeichnet, dass** der Fördermengenbegrenzer austauschbar in der Versorgungsleitung (34) angeordnet ist.

7. Rotorpumpe nach einem der vorhergehenden Ansprüche, **dadurch gekennzeichnet, dass** der Fördermengenbegrenzer durchströmt wird.

8. Schmiermittelförderungsbegrenzungseinrichtung (36) der Rotorpumpe (10) nach einem der vorhergehenden Ansprüche

## Claims

1. Rotor pump (10) having a casing (12), having a rotor (18) which is rotatably mounted in the casing (12), and at least one vane (20) which is guided to be displaceable in the rotor (18), the vane (20) bearing against an inner circumferential surface (16) of the working area (16) by at least one of its tips and thereby dividing the said working area (16) into a suction area and a pressure area, and having a lubricant supply means (32) which has a supply duct (34) whose outlet (24) opens directly or indirectly into the working area (16), an adjustable flow-rate limiter for the lubricant being provided in the supply duct (16) and the flow-rate limiter being provided with an orifice plate (44), **characterised in that** the flow-rate limiter has a spigot (50) which extends in the direction of flow (40), and the spigot (50) is aligned with the orifice (52) in the orifice plate (44) and can be inserted in the orifice (52) in the orifice plate (44) by a conical tip (54), the depth to which the spigot (50) enters the orifice (52) in the orifice plate depending on the vacuum generated by the rotor pump (10) and/or on the pressure of the lubricant.

2. Rotor pump according to claim 1, **characterised in that** the supply duct (34) opens into the suction area, into the pressure area and/or into the drive shaft (30) of the rotor (18).

3. Rotor pump according to either of the preceding claims, **characterised in that** the orifice plate (44) is mounted to be displaceable in the direction leading towards the spigot (50).

4. Rotor pump according to claim 1 or 2, **characterised in that** the spigot (50) is mounted to be displaceable in the direction leading towards the orifice plate (44).

5. Rotor pump according to one of the preceding claims, **characterised in that** there is mounted between the orifice plate (44) and the spigot (50) a means, such as a spring (48) for example, which holds them spaced apart.

6. Rotor pump according to one of the preceding claims, **characterised in that** the flow-rate limiter is so arranged in the supply duct (34) as to be replaceable.

7. Rotor pump according to one of the preceding claims, **characterised in that** flow takes place through the flow-rate limiter

8. Lubricant flow-rate limiting means (36) of the rotor pump (10) according to one of the preceding claims.

## Revendications

1. Pompe à rotor (10) comprenant un carter de pompe (12), un rotor (18) logé de façon rotative dans le carter de pompe (12) et au moins une ailette (20) guidée de façon coulissante dans le rotor (18), l'ailette (20) s'appliquant par au moins l'une de ses extrémités d'ailette sur une surface périphérique intérieure de l'espace de travail (16) et divisant ainsi cet espace en un espace d'admission et un espace de refoulement, et un dispositif d'alimentation en lubrifiant (32) avec une conduite d'alimentation (34), dont la sortie (24) débouche directement ou indirectement dans l'espace de travail (16), un limiteur de débit réglable pour le lubrifiant étant prévu dans la conduite d'alimentation (16) et le limiteur de débit étant doté d'un obturateur (44), **caractérisée en ce que** le limiteur de débit présente un mandrin (50) s'étendant dans le sens d'écoulement (40), le mandrin (50) est aligné avec l'ouverture (52) de l'obturateur (44) et peut être introduit par une pointe (54) de forme conique dans l'ouverture (52) de l'obturateur (44), la profondeur d'entrée du mandrin (50) dans l'ouverture d'obturateur (52) dépendant de la dépression générée par la pompe à rotor (10) et/ou de la pression de lubrifiant.

2. Pompe à rotor selon la revendication 1, **caractérisée en ce que** la conduite d'alimentation (34) débouche dans l'espace d'admission, dans l'espace de refoulement et/ou dans l'arbre d'entraînement (30) du rotor (18).

3. Pompe à rotor selon l'une quelconque des revendications précédentes, **caractérisée en ce que** l'obturateur (44) est logé de façon coulissante en direction du mandrin (50).

4. Pompe à rotor selon la revendication 1 ou 2, **caractérisée en ce que** le mandrin (50) est logé de façon coulissante en direction de l'obturateur (44).

5. Pompe à rotor selon l'une quelconque des revendications précédentes, **caractérisée en ce qu'**un moyen maintenant l'obturateur à distance, par exemple un ressort (48), est disposé entre l'obturateur (44) et le mandrin (50).

6. Pompe à rotor selon l'une quelconque des revendications précédentes, **caractérisée en ce que** le limiteur de débit est disposé de façon amovible dans la conduite d'alimentation (34).

7. Pompe à rotor selon l'une quelconque des revendications précédentes, **caractérisée en ce que** le limiteur de débit est traversé.

8. Dispositif de limitation de débit de lubrifiant (36) de la pompe à rotor (10) selon l'une quelconque des revendications précédentes.
